# EUROPEAN PATENT SPECIFICATION

(11) **EP 2 801 850 B1**
(45) Date of publication and mention of the grant of the patent: **20.11.2024**
(21) Application number: 14166847.5
(22) Date of filing: 02.05.2014
(51) Int. Cl.: G02B 6/38

(54) **Optical connector**
Optischer Verbinder
Connecteur optique

(30) Priority: 10.05.2013 JP 2013099885
(43) Date of publication of application: 12.11.2014
(73) Proprietor: Yazaki Corporation, Tokyo (JP)
(72) Inventor: Hikosaka, Tomohiro, Shizuoka 410-1107 (JP)
(74) Representative: Hoffmann Eitle

(56) References cited:
- EP-A1- 2 105 773
- EP-A1- 2 587 290
- EP-A1- 2 894 500
- EP-A2- 0 831 348
- WO-A1-2014/104016
- JP-A- 2005 265 987
- JP-A- 2011 095 601
- US-A- 5 389 014

## Description

### Technical Field

The present invention relates to an optical connector.

### Background Art

In a conventional example, there is known an optical connector having an optical cable as an optical fiber, a ferrule which is arranged at one end of the optical cable and through which a core of the optical cable is inserted, a frame as a housing in which the ferrule is accommodated, and a first face plate and a second face plate as holders which are assembled to the frame and engaged with the frame through a first latch piece and a second latch piece to allow the frame to hold the ferrule (refer to PTL 1).

In the conventional optical connector, the first face plate and the second face plate are assembled to the frame so as to cover upper and lower faces of the frame. Each of the first face plate and the second face plate is provided with a ferrule receiver which allows the frame to hold the ferrule through a coil spring.

### Citation List

### Patent Literature

Reference is made to JP H06-059156 A. Additionally, EP-A-0 831 348 and JP2005265987A disclose an optical connector. These documents, however, fail to disclose the use of interacting ribs and groove portions to suppress positional displacement of a cover when it is assembled to the housing of the optical connector. They also fail to disclose a temporary engagement portion that is configured to allow the holder to be held in the housing in a temporary engagement position and allow the ferrule to be accommodated in the housing.

### Summary of Invention

The conventional optical connector according to JP H06-059156 A is provided with a positioning projection which determines the assembling position of the holders relative to the housing.

In this positioning projection, however, there is a possibility of causing positional displacements that the holders are pivoted or inclined to the housing in assembling the holders to the housing, causing inferior assembly.

Therefore, an object of the present invention is to provide an optical connector allowing the assembly to be improved.

According to the invention, there is provided an optical connector comprising: an optical fiber; a ferrule which is provided at an end of the optical fiber and through which a core of the optical fiber is to be inserted; a housing in which the ferrule is accommodated; a holder, provided with a ferrule retainer, which is inserted into the housing and engaged with the housing through an engagement portion, the ferrule retainer allowing the housing to hold the ferrule; a pair of ribs integrally connected to each other through the ferrule retainer, which are provided in the holder so as to extend along an inserting direction of the holder into the housing, the ferrule retainer provided between the pair of ribs; and a pair of fitting portions which are groove portions and are provided in the housing and to which the ribs are to be fitted to suppress a positional displacement where the holder may be pivoted or inclined to the housing when assembling the holder to the housing, the pair of ribs fitted to the pair of fitting portions when inserting the holder into the housing, wherein the engagement portion includes: a temporary engagement portion configured to allow the holder to be held in the housing in a temporary engagement position and allow the ferrule to be accommodated in the housing; and a formal engagement portion configured to allow the holder to be inserted into the housing under a condition that the ferrule is accommodated in the housing and allow the holder to be held in the housing in a formal engagement position.

Since the ribs are provided in one of the holder and the housing so as to extend along the inserting direction of the holder into the housing and the fitting portions to be fitted to the ribs are provided in the other of the holder and the housing, with the ribs fitted to the fitting portions, it is possible to suppress a positional displacement where the holder may be pivoted or inclined to the housing when assembling the holder to the housing.

Therefore, it is possible to suppress a positional displacement of the holder relative to the housing, allowing the assembly of the optical connector to be improved.

The engagement portion includes a temporary engagement portion configured to allow the holder to be held in the housing and allow the ferrule to be accommodated in the housing, and a formal engagement portion configured to allow the holder to be inserted into under a condition that the ferrule is accommodated in the housing and allow the holder to be held in the housing.

By the temporary engagement portion, it is possible to allow the holder to be held in the housing and allow the ferrule to be accommodated in the housing. In shifting from the engagement with the temporary engagement portions to the engagement with the formal engagement portions, with the ribs fitted to the fitting portions, it is possible to suppress the positional displacement of the holder relative to the housing, allowing the assembly to be improved.

The ribs are provided in the holder, and the holder is provided, between the ribs, with a ferrule retainer which allows the housing to hold the ferrule. Additionally, the ribs are connected to each other through the ferrule retainer integrally.

Since the ribs are connected to each other through the ferrule retainer integrally, it is possible to improve the rigidity of the ribs thereby allowing the suppression of deformation of the ribs and also possible to stabilize the fitting of the ribs to the fitting portions thereby allowing the assembly to be improved.

The optical fiber may be fixed to the ferrule through a crimping sleeve which allows the core to be inserted therethrough, and the holder may be configured to allow the housing to hold the ferrule through the crimping sleeve.

Since the holder allows the housing to hold the ferrule through the crimping sleeve, even if an external force, such as tensile force, is applied to the optical fiber, it is possible to prevent the external force from being transmitted to the ferrule owing to the provision of the crimping sleeve.

In accordance with the aspect of the present invention, it is possible to produce an effect of providing an optical connector capable of improving its assembly.

### Brief Description of Drawings

Fig. 1 is an exploded perspective view of an optical connector according to a first example not falling within the scope of the claimed invention.
Fig. 2 is a perspective view of a housing and a holder of the optical connector according to the first example.
Fig. 3 is a side view illustrating a situation where the holder is temporarily engaged with the housing of the optical connector according to the first example.
Fig. 4 is an enlarged sectional view of an essential part of the optical connector according to the first example.
Fig. 5(a) is a perspective view illustrating the situation where the holder is temporarily engaged with the housing of the optical connector according to the first example, and Fig. 5(b) is a sectional view of Fig. 5(a).
Fig. 6(a) is a perspective view illustrating a situation where the holder is formally engaged with the housing of the optical connector according to the first example, and Fig. 6(b) is a sectional view of Fig. 6(a).
Fig. 7 is an exploded perspective view of an optical connector according to a second embodiment.
Fig. 8 is a perspective view of a housing of the optical connector according to the second embodiment.
Fig. 9 is a perspective view of a holder of the optical connector according to the second embodiment.
Fig. 10 is a side view illustrating a situation where the holder is temporarily engaged with the housing of the optical connector according to the second embodiment.

### Description of Embodiments

Optical connectors according to embodiments will be described with reference to drawings.

### (First example not falling within the scope of the claimed invention)

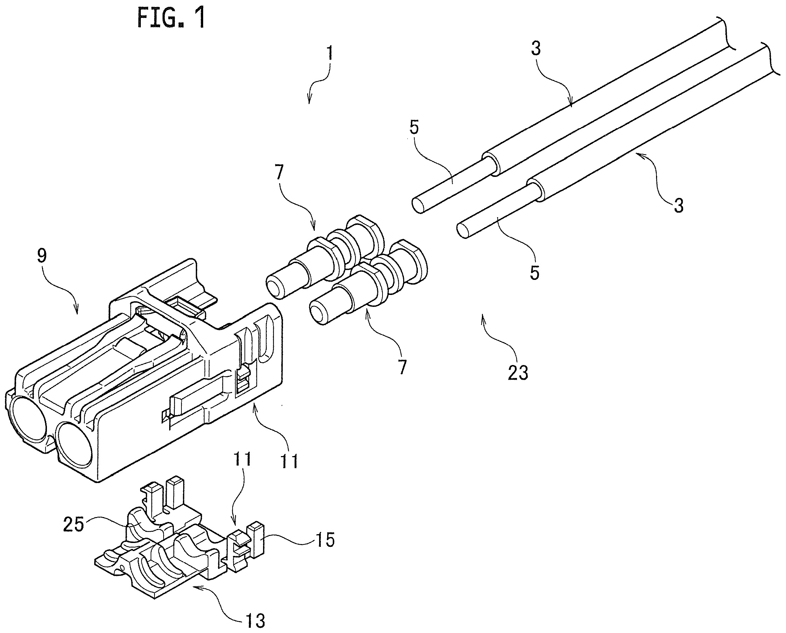

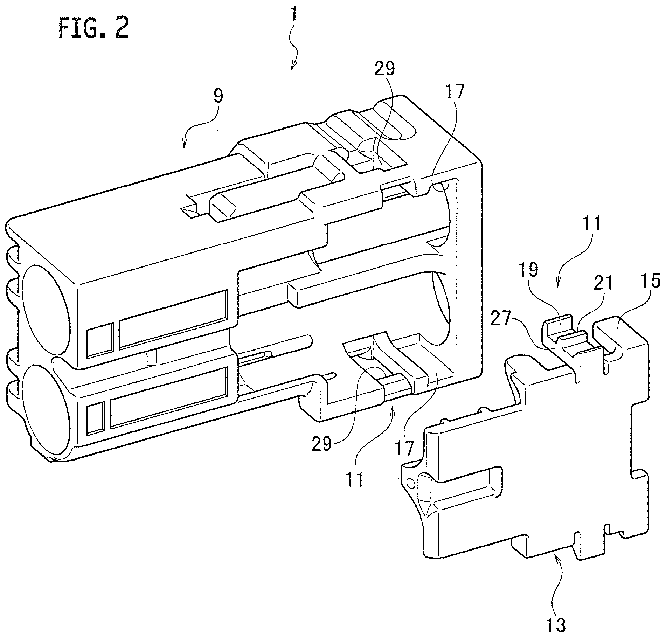

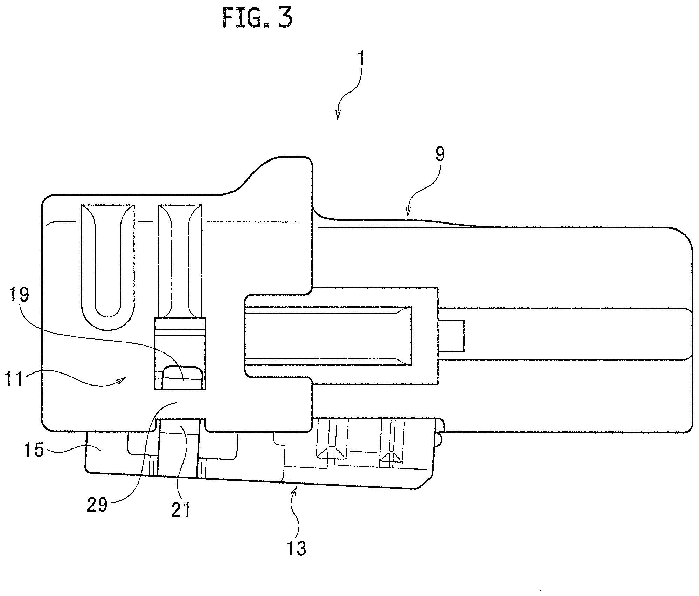

A first example not falling within the scope of the claimed invention will be described with reference to Figs. 1 to 6.

An optical connector 1 according to the first example, not falling under the scope of the claimed invention, includes two optical fibers 3, two ferrules 7 arranged at respective ends of the optical fibers 3 to allow insertion of cores 5 of the optical fibers 3, a housing 9 for accommodating the ferrules 7, and a holder 13 inserted into and engaged with the housing 9 through a pair of engagement portions 11 to allow the ferrules 7 to be retained in the housing 9.

In the holder 13, a pair of ribs 15 are formed so as to extend toward an inserting direction of the holder 13 into the housing 9. The housing 9 is provided with a pair of fitting portions 17 to be fitted with the ribs 15.

Each of the engagement portions 11 includes a temporary engagement portion 19 which allows the holder 13 to be held in the housing 9 and allows the ferrules 9 to be accommodated in the housing 9, and a formal engagement portion 21 which allows the holder 13 to be inserted into the housing 9 under a condition that the ferrules 7 are accommodated in the housing 9 and allows the holder 13 to be held in the housing 9.

Each of the optical fibers 3 is formed by a solid type optical fiber cable where a cover is arranged on the periphery of the core 5. In each of the optical fibers 3, One end of each of the optical fibers 3 is connected to an instrument or the like. While on the other end of each of the optical fibers 3, the core 5 is exposed and inserted into the ferrule 7.

Two ferrules 7 are arranged in parallel with each other. The cores 5 of the optical fibers 3 are inserted into respective ferrules 7, then completing a ferrule assembly 23. In the ferrule assembly 23, respective end faces of the optical fibers 3 are polished by such as a polishing jig (not illustrated) for holding the ferrule assembly 23 and a polishing machine (not illustrated) for polishing tip faces of the ferrules 7. The ferrule assembly 23 part on the side of the ferrules 7 is accommodated in the housing 9.

The housing 9 is shaped to be a rectangular tube and accommodates two ferrules 7 in parallel arrangement. The housing 9 can be mated with a mating housing (not illustrated) which accommodates mating ferrules arranged at leading ends of mating optical fibers (not illustrated). With the housing 9 mating with the mating housing, the ferrules 7 are connected to the mating ferrules, then effecting optical coupling between the mating optical fibers and the optical fibers 3. The holder 13 is inserted and assembled into the housing 9.

In assembling, the holder 13 is inserted into the housing 9 through the underside of the housing 9 part accommodating the ferrules 7. In order to allow the ferrules 7 to be held in the housing 9, the holder 13 serves to prevent the ferrule assembly 23 from slipping off the housing 9 through ferrule retainers 25 formed at a central part of the holder 13 in the axial direction. The holder 13 is engaged with the housing 9 through the engagement portions 11.

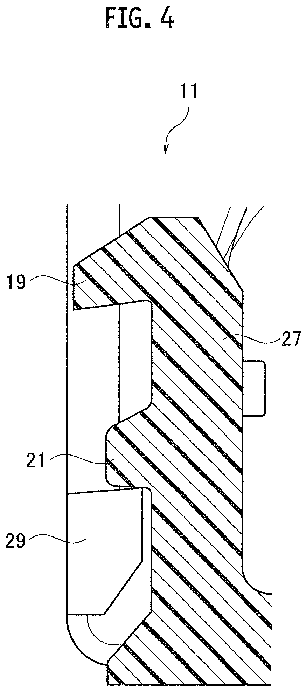

The engagement portions 11 includes a lock arms 27 flexibly arranged on both sides of the holder 13 in the width direction and engaged portions 29 formed by openings penetrating through the holder 13 in the width direction. Each of the lock arms 27 is provided with a temporary engagement portion 19 and a formal engagement portion 21. As illustrated in Fig. 4, the engaged portion 29 has an engagement face formed on an upper side (in Fig. 4) to engage with respective engagement faces of the temporary engagement portion 19 and the formal engagement portion 21 and an inclined face formed on the lower side to abut against respective inclined faces of the temporary engagement portion 19 and the formal engagement portion 21.

The temporary engagement portion 19 is formed so as to project from the leading end of the lock arm 27. Again the temporary engagement portion 19 is provided, on the upper side (in Fig. 4), with the inclined face which deflects the lock arm 27 with its abutment against the engaged portion 29 and also provided, on the lower side, with the engagement face which engages with the engaged portion 29 with return of the lock arm 27. Since the holder 13 is inserted into the housing 9 so that the engagement face of the temporary engagement portion 19 engages with the engaged portion 29, the temporary engagement portion 19 allows the holder 13 to be held in a temporary engagement position relative to the housing 9.

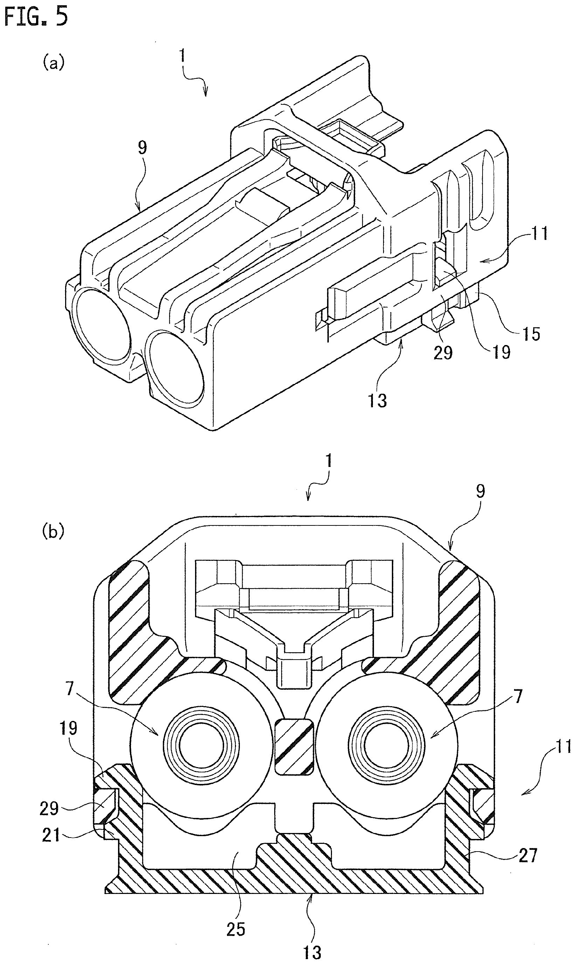

In the temporary engagement position of the holder 13, as illustrated in Fig. 5(b), the ferrule retainers 25 of the holder 13 are positioned below the ferrules 7 to allow the ferrules 7 side of the ferrule assembly 23 to be inserted into the housing 9.

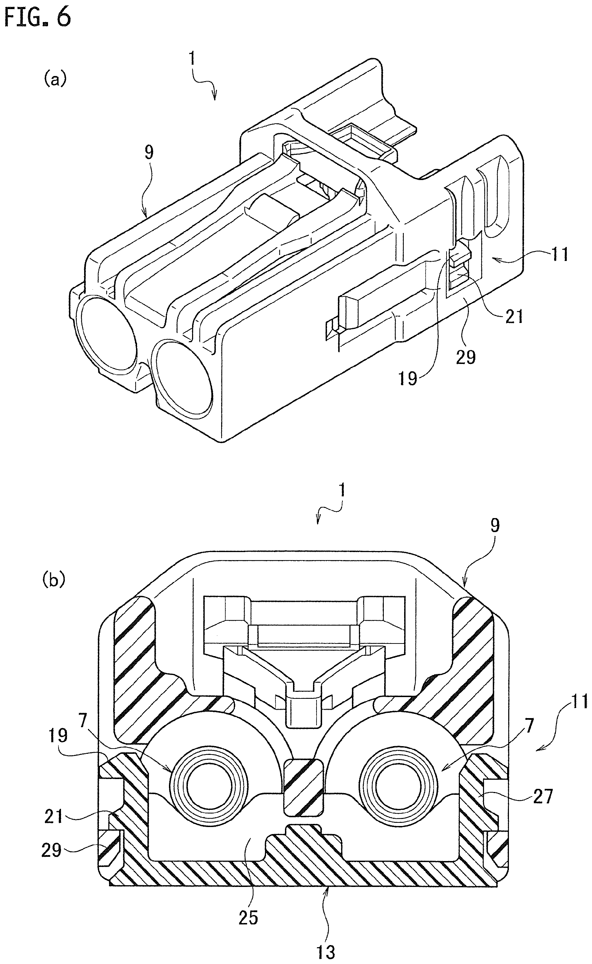

As illustrated in Fig. 5(b), under the temporary engagement portion 19, the formal engagement portion 21 is formed so as to project from a main body of the lock arm 27. Again the formal engagement portion 21 is provided, on the upper side (in Fig. 5(b)), with the inclined face which deflects the lock arm 27 with its abutment against the engaged portion 29 and also provided, on the lower side, with the engagement face which engages with the engaged portion 29 with return of the lock arm 27. Since the holder 13 is further inserted from the temporary engagement position to the housing 9 so that the engagement face of the formal engagement portion 21 engages with the engaged portion 29, the formal engagement portion 21 allows the holder 13 to be held in a formal engagement position relative to the housing 9 (see Fig. 6(b)).

In the formal engagement position of the holder 13, as illustrated in Fig. 6(b), the ferrule retainers 25 of the holder 13 are shifted upwardly to engage with the ferrules 7 of the ferrule assembly 23, preventing the ferrule assembly 23 from slipping off the housing 9.

The holder 13, whose position relative to the housing 9 is changeable between the temporary engagement position and the formal engagement position, is provided with the ribs 15. While, the housing 9 is provided with the fitting portions 17 for engagement with the ribs 15.

The pair of ribs 15 are formed on both sides of the holder 13 in the axial direction so as to extend toward the inserting direction of the holder 13 into the housing 9. When inserting the holder 13 into the housing 9 for assembling, the pair of ribs 15 are fitted to the pair of fitting portions 17.

Corresponding to the pair of ribs 15, the pair of fitting portions 17 are respective groove portions which are formed on respective inner faces of both lateral walls of the housing 9 so as to extend toward the inserting direction of the holder 13 into the housing 9. Since the pair of ribs 15 are fitted to the pair of fitting portions 17, the holder 13 is inserted into the housing 9, effecting their assembling. Then, until the temporary engagement portion 19 is engaged with the engaged portion 29 in the engagement portion 11, it is possible to prevent an occurrence of such a displacement that the holder 13 is pivoted or inclined to the housing 9. In the temporary engagement position of the holder 13 to the housing 9, additionally, it is possible to prevent the holder 13 from being inclined to the housing 9 due to the mating of the ribs 15 with the fitting portions 17.

When moving the holder 13 from the temporary engagement position to the formal engagement position to the housing 9, the mating of the ribs 15 with the fitting portions 17 enables the insertion of the holder 13 into the housing 9 to be conducted stably without any inclination of the holder 13 to the housing 9. In the engagement portion 11, therefore, there is no possibility that the formal engagement portion 21 makes partial contact with the engaged portion 29, so that the formal engagement portion 21 can be engaged with the engaged portion 29 certainly.

In assembling the holder 13 to the housing 9, the positional displacement of the holder 13 relative to the housing 9 can be prevented by fitting the ribs 15 to the fitting portions 17, so that it is possible to avoid breakage of the housing 9 and the holder 13.

In the optical connector 1 according to the first example, the ribs 15 and the fitting portions 17 are arranged on the side of an axial end of the housing 9. Therefore, in the temporary engagement position of the holder 13 relative to the housing 9, the holder 13 is slightly inclined to the housing 9 due to the holder's own weight. To the contrary, if an interference of these elements with the other members can be avoided, it is preferable to arrange the ribs 15 and the fitting portions 17 on the axial center of the housing 9 in view of suppressing such an inclination of the holder 13 to the housing 9.

In the optical connector 1, the holder 13 has the ribs 15 formed so as to extend along the inserting direction of the holder 13 into the housing 9, while the housing 9 is provided with the fitting portions 17 to which the ribs 15 are to be fitted. Consequently, since the ribs 15 are fitted to the fitting portions 17 in assembling the holder 13 to the housing 9, it is possible to suppress the positional displacement where the holder 13 is pivoted or inclined to the housing 9.

In the optical connector 1, accordingly, it is possible to suppress the positional displacement of the holder 13 relative to the housing 9 and improve the assembly of constituents.

The engagement portion 11 includes the temporary engagement portions 19 and the formal engagement portions 21. Owing to the provision of the temporary engagement portions 19, it becomes possible to allow the holder 13 to be held in the housing 9 and also allow the ferrules 9 to be accommodated in the housing 9. During shifting from one engagement of the engaged portion 29 with the temporary engagement portions 19 to another engagement of the engaged portion 29 with the formal engagement portions 21, the ribs 15 are fitted to the fitting portions 17, so that it is possible to suppress the positional displacement of the holder 12 relative to the housing 9, allowing the assembly to be improved.

### (Second Embodiment)

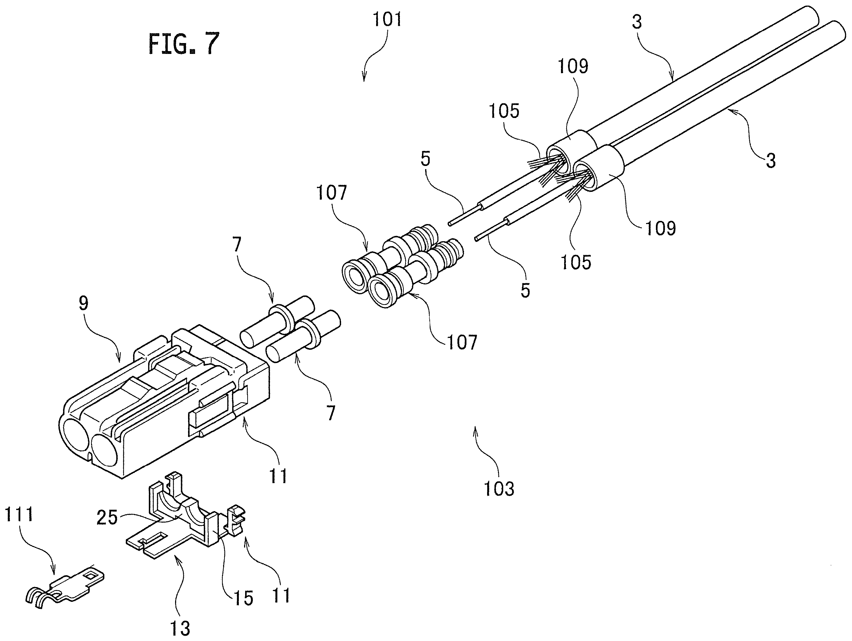

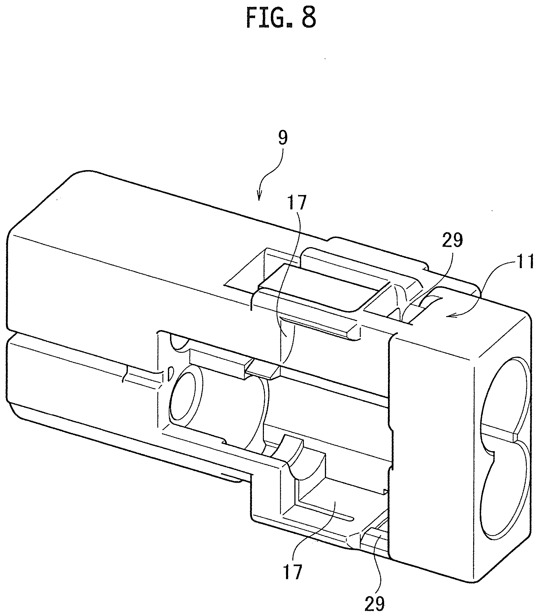

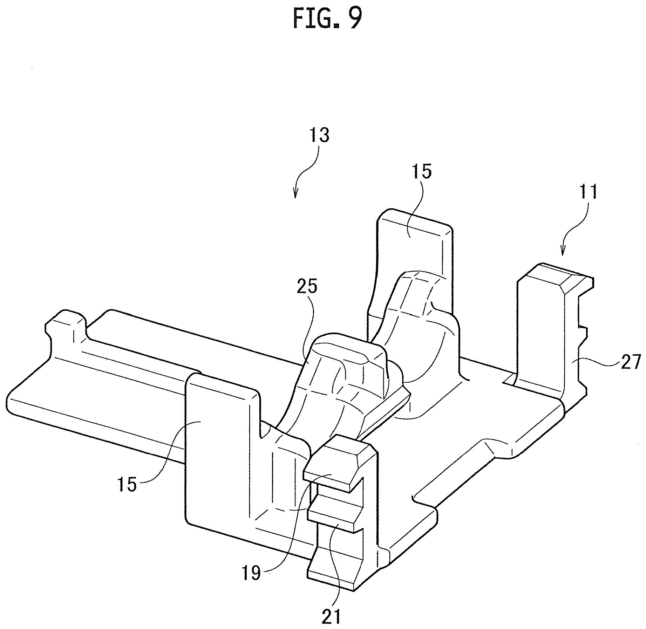

A second embodiment, which is according to the claimed invention, will be described with reference to Figs. 7 to 10.

In an optical connector 101 according to the second embodiment, a pair of ribs 15 are connected to each other through ferrule retainers 25 integrally.

The optical fibers 3 are fixed with the ferrules 7 through crimping sleeves 107 into which the cores 5 are to be inserted. The holder 13 allows the ferrules 7 to be held in the housing 9 through the crimping sleeves 107.

In the second embodiment, elements identical to those of the first example are indicated with the same reference numerals respectively, and descriptions in both constitution and function of the same constituents are omitted with reference to those of the first example. Nevertheless, as a matter of course, respective effects brought by these constituents will be similar to those of the first example.

In a ferrule assembly 103 of the optical connector 101, as illustrated in Fig. 7, tensile strength fibers 105 are disposed on the periphery of the optical fibers 3 and the peripheries of the tensile strength fibers 105 are covered with secondary covers, providing a hollow type optical fiber cable.

While the cores 5 are inserted through the crimping sleeves 107 and crimping rings 109, the optical fibers 3 are respectively inserted into the ferrules 7 and further fixed to the ferrules 7 through the crimping sleeves 107 and the crimping rings 109, completing the ferrule assembly 103.

A spring member 111 is accommodated in the housing 9 part on the side of the ferrules 7 of the ferrule assembly 103. The spring member 111 is disposed between the ferrules 7 and the ferrule retainers 25 of the holder 13 to always urge the ferrules 7 against a mating housing (not illustrated).

In the optical connector 101, the holder 13 is provided with the ribs 15, while the housing 9 is provided with the fitting portions 17 to which the ribs 15 are to be fitted.

The pair of ribs 15 are formed on both sides of the holder 13 in the axial direction so as to extend toward the inserting direction of the holder 13 into the housing 9. The ferrule retainers 25 are arranged between the pair of ribs 15.

By allowing the crimping sleeves 107 to be held in the housing 9, the ferrule retainers 25 operate to prevent the ferrule assembly 103 from slipping off the housing 9, allowing the ferrules 7 to be retained in the housing 9.

Since the ferrule retainers 25 allow the housing 9 to hold the ferrules 7 through the crimping sleeves 107, even when an external force, such as tensile force, is applied to the optical fibers 3, the external force could be absorbed by the fixing portion between the optical fiber 3 and the crimping sleeve 107, so that it is possible to remarkably prevent the external force from being transmitted to insertion parts between the core 5 of the optical fibers 3 and the ferrules 7.

The pair of ribs 15 are connected to each other through the ferrule retainers 25 integrally, providing one continuous member. Thus, due to the integration of the pair of ribs 15 through the ferrule retainers 25, the rigidity of the ribs 15 is improved to allow the prevention of the pair of ribs 15 from being deformed by such as external force.

The pair of ribs 15 are fitted to the pair of fitting portions 17 as respective groove portions which are formed on respective inner faces of both lateral walls of the housing 9 so as to extend toward the inserting direction of the holder 13 into the housing 9, corresponding to the pair of ribs 15.

Since the ribs 15 are fitted to the fitting portions 17, it is possible to prevent the positional displacement of the holder 13 relative to the housing 9 in assembling the holder 13 to the housing 9, allowing the prevention of the housing 9 and the holder 13 from being damaged.

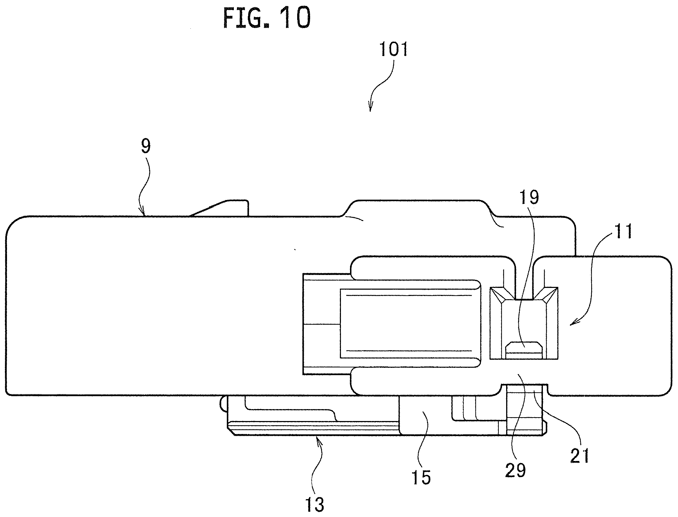

Here, it is noted that the pair of ribs 15 and the pair of fitting portions 17 are positioned on the center of the housing 9 in the axial direction. Therefore, in the temporary engagement position of the holder 13 relative to the housing 9 illustrated in Fig. 10, it is possible to suppress a slight inclination of the holder 13 to the housing 9 due to the holder's own weight.

In the optical connector 101, the pair of ribs 15, 15 are connected to each other through the ferrule retainers 25 integrally. Thus, it is possible to improve the rigidity of the ribs 15 to allow the suppression of deformation of the ribs 15 and also possible to stabilize the fitting of the ribs 15 to the fitting portions 17, allowing the assembly to be improved.

The holder 18 allows the ferrules 7 to be held in the housing 9 through the crimping sleeves 107. Therefore, even when an external force, such as tensile force, is applied to the optical fibers 3, it is possible to prevent the external force from being transmitted to the ferrules 7 by the crimping sleeves 107.

In common with the optical connector according to each of the embodiments, the ribs are provided in the holder, while the fitting portions are provided in the housing. However, the rib may be provided in the housing on condition of providing the fitting portions in the holder in the modification.

Two optical fibers are arranged in parallel with each other in common with the embodiments. However, not limited to this, the constitution of the optical connector of the present invention is also applicable to so-called "optical loop-back connector" where both ends of an optical fiber are arranged in parallel with each other.

## Claims

1. An optical connector ( 101) comprising:
an optical fiber (3);
a ferrule (7) which is provided at an end of the optical fiber (3) and through which a core (5) of the optical fiber (3) is to be inserted;
a housing (9) in which the ferrule (7) is accommodated;
a holder (13), provided with a ferrule retainer (25), which is inserted into the housing (9) and engaged with the housing (9) through an engagement portion (11), the ferrule retainer (25) allowing the housing (9) to hold the ferrule (7);
a pair of ribs (15) integrally connected to each other through the ferrule retainer (25), which are provided in the holder (13) so as to extend along an inserting direction of the holder (13) into the housing, the ferrule retainer (25) provided between the pair of ribs; and
a pair of fitting portions (17) which are groove portions and are provided in the housing (9) and to which the ribs (15) are to be fitted to suppress a positional displacement where the holder (13) may be pivoted or inclined to the housing (9) when assembling the holder to the housing, the pair of ribs (15) fitted to the pair of fitting portions (17) when inserting the holder (13) into the housing (9),
wherein
the engagement portion (11) includes:
a temporary engagement portion (19) configured to allow the holder (13) to be held in the housing (9) in a temporary engagement position and allow the ferrule (7) to be accommodated in the housing (9); and
a formal engagement portion (21) configured to allow the holder (13) to be inserted into the housing (9) under a condition that the ferrule (7) is accommodated in the housing (9) and allow the holder (13) to be held in the housing (9) in a formal engagement position;
wherein the pair of ribs (15) are configured to mate with the fitting portions (17) in the temporary engagement position.

2. The optical connector (101) according to claim 1, wherein:
the optical fiber (3) is fixed to the ferrule (7) through a crimping sleeve (107) which allows the core (5) to be inserted therethrough, and
the holder (13) is configured to allow the housing (9) to hold the ferrule (7) through the crimping sleeve (107) .

## Patentansprüche

1. Optischer Verbinder (101), umfassend:
eine optische Faser (3);
eine Ferrule (7), die an einem Ende der optischen Faser (3) bereitgestellt ist, und durch die ein Kern (5) der optischen Faser (3) einzuführen ist;
ein Gehäuse (9), in dem die Ferrule (7) aufgenommen ist;
einen Halter (13), der mit einer Ferrulenhalterung (25) bereitgestellt ist, die in das Gehäuse (9) eingeführt ist, und mit dem Gehäuse (9) über einen Eingriffsabschnitt (11) in Eingriff steht, wobei die Ferrulenhalterung (25) dem Gehäuse (9) erlaubt, die Ferrule (7) zu halten;
ein Paar von Rippen (15), die durch die Ferrulenhalterung (25) integral miteinander verbunden sind, die in dem Halter (13) bereitgestellt sind, um sich entlang einer Einführrichtung des Halters (13) in das Gehäuse zu erstrecken, wobei die Ferrulenhalterung (25) zwischen dem Paar von Rippen bereitgestellt ist; und
ein Paar von Passabschnitten (17), die Nutabschnitte sind, und in dem Gehäuse (9) bereitgestellt sind, und an denen die Rippen (15) angebracht werden sollen, um eine Positionsverschiebung zu unterdrücken, bei welcher der Halter (13) zum Gehäuse (9) geschwenkt oder geneigt werden kann, wenn der Halter an dem Gehäuse zusammengebaut wird,
wobei das Paar von Rippen (15) an das Paar von Passabschnitten (17) angepasst ist, wenn der Halter (13) in das Gehäuse (9) eingesetzt ist, wobei der Eingriffsabschnitt (11) Folgendes einschließt:
einen temporären Eingriffsabschnitt (19), der konfiguriert ist, um zu erlauben, dass der Halter (13) in dem Gehäuse (9) in einer temporären Eingriffsposition gehalten wird, und dass die Ferrule (7) in dem Gehäuse (9) aufgenommen wird; und
einen formalen Eingriffsabschnitt (21), der konfiguriert ist, um zu erlauben, dass der Halter (13) in das Gehäuse (9) unter einer Bedingung eingeführt wird, dass die Ferrule (7) in dem Gehäuse (9) aufgenommen ist, und um zu erlauben, dass der Halter (13) in dem Gehäuse (9) in einer formalen Eingriffsposition gehalten wird;
wobei das Paar von Rippen (15) konfiguriert ist, um mit den Passabschnitten (17) in der temporären Eingriffsposition zusammenzupassen.

2. Optischer Verbinder (101) nach Anspruch 1, wobei:
die optische Faser (3) an der Ferrule (7) durch eine Crimphülse (107) fixiert ist, die es erlaubt, den Kern (5) dort hindurch einzuführen, und
der Halter (13) konfiguriert ist, um es dem Gehäuse (9) zu erlauben, die Ferrule (7) durch die Crimphülse (107) zu halten.

## Revendications

1. Connecteur optique (101) comprenant :
une fibre optique (3) ;
une ferrule (7) qui est prévue à une extrémité de la fibre optique (3) et à travers laquelle une âme (5) de la fibre optique (3) doit être insérée ;
un boîtier (9) dans lequel la ferrule (7) est logée ;
un support (13), prévu avec un moyen de retenue de ferrule (25), qui est inséré dans le boîtier (9) et engagé avec le boîtier (9) par le biais d'une partie d'engagement (11), le moyen de retenue de ferrule (25) permettant au boîtier (9) de maintenir la ferrule (7) ;
une paire de nervures (15) reliées intégralement l'une à l'autre par le biais du moyen de retenue de ferrule (25), lesquelles sont prévues dans le support (13) de manière à s'étendre le long d'une direction d'insertion du support (13) dans le boîtier, le moyen de retenue de ferrule (25) étant prévu entre la paire de nervures ; et
une paire de parties de montage (17) qui sont des parties de rainures et sont prévues dans le boîtier (9) et sur lesquelles les nervures (15) doivent être montées pour supprimer un déplacement en position lorsque le support (13) peut être pivoté ou incliné vers le boîtier (9) lors de l'assemblage du support sur le boîtier, la paire de nervures (15) étant montée sur la paire de parties de montage (17) lors de l'insertion du support (13) dans le boîtier (9), dans lequel la partie d'engagement (11) inclut :
une partie d'engagement temporaire (19) configurée pour permettre au support (13) d'être maintenu dans le boîtier (9) dans une position d'engagement temporaire et permettre à la ferrule (7) d'être logée dans le boîtier (9) ; et
une partie d'engagement formelle (21) configurée pour permettre au support (13) d'être inséré dans le boîtier (9) à condition que la ferrule (7) soit logée dans le boîtier (9) et permettre au support (13) d'être maintenu dans le boîtier (9) dans une position d'engagement formelle ;
dans lequel la paire de nervures (15) est configurée pour correspondre avec les parties de montage (17) dans la position d'engagement temporaire.

2. Connecteur optique (101) selon la revendication 1, dans lequel :
la fibre optique (3) est fixée à la ferrule (7) par le biais d'un manchon de sertissage (107) qui permet à l'âme (5) d'être insérée à travers celui-ci, et
le support (13) est configuré pour permettre au boîtier (9) de maintenir la ferrule (7) par le biais du manchon de sertissage (107).
